# EUROPEAN PATENT APPLICATION

(11) **EP 2 568 696 A2**
(43) Date of publication of application: **13.03.2013**
(21) Application number: 12162756.6
(22) Date of filing: 30.03.2012
(51) Int. Cl.: H04N 1/00

(54) **Apparatus and method for uploading image to a social network service thereof**

(30) Priority: 09.09.2011 KR 20110092256
(71) Applicant: Samsung Electronics Co., Ltd., Suwon-si, Gyeonggi-do, 443-742 (KR)
(72) Inventor: Song, Mi-sook, Gyeonggi-do (KR); Kang, Hyung-jong, Seoul (KR); Park, In-chang, Seoul (KR); Jung, Hee-chul, Gyeonggi-do (KR)
(74) Representative: Hancox, Jonathan Christopher

(57) **Abstract**

An apparatus and a method for uploading an image file to a social network service (SNS) are provided. The apparatus uploads an image file generated by scanning, or an image file previously saved at the apparatus, using an application installed on the apparatus. The apparatus selects at least one of the image files generated by scanning at an image scanning apparatus connected to the apparatus, or previously-saved image files, and uploads the selected image file to at least one SNS site, using the application installed on the apparatus.

## Description

The present invention relates to uploading an image file to a social network service (SNS), and more particularly to uploading an image file scanned and transmitted from a connectable image scanning apparatus to a SNS site selectable by a scan application.

An image scanning apparatus, such as scanner, facsimile or multi-function peripheral (MFP) operates to scan and image and generates an image file. The "multi-function peripheral" herein includes an image scanning apparatus which combines a plurality of functions including copying, printing, scanning or fax transmission.

A device driver or an application may be installed on a computer that is connected to an image scanning apparatus by wired/wireless network or USB interface, to control the image scanning apparatus, or execute at least one function supported by the image scanning apparatus.

An application is computer software designed to help user an image scanning apparatus or an apparatus connectable to the image scanning apparatus. Different applications are used depending on the manufacturers of the image scanning apparatuses.

An application may be installed on a computer connectable to the image scanning apparatus to help scan a photo or document and send an image file corresponding to the scanned photo or document to the computer. The image file received from the image scanning apparatus is saved in the computer. A user may log on a social network service (SNS) site where he has his on-line human network by executing the web browser installed on the computer, and upload the saved image file to the SNS site.

According to an exemplary embodiment, a method is provided for uploading an image file to a social network service (SNS) site using an apparatus connectable to an image scanning apparatus, which may include selecting, by an application executed on the apparatus, an image file to be uploaded to the SNS site on a user interface screen provided by a display unit of the apparatus, selecting a SNS site, and uploading the selected image file to the selected SNS site. The image file may be generated by the application, by being scanned at the image scanning apparatus.

In an exemplary embodiment, the method may include performing configuration for login in the SNS site.

In an exemplary embodiment, the method may include displaying the SNS site, to which the selected image file is uploaded, on a web browser screen executed on the apparatus, through login to the SNS site using the configuration setting.

In an exemplary embodiment, the method may include saving the scanned image file to a storage unit of the apparatus or uploading the scanned image file to the SNS site.

In an exemplary embodiment, the selecting the SNS site may include distinctively displaying the SNS site depending on whether it is possible to upload the selected image file to the SNS site or not.

In an exemplary embodiment, if a plurality of SNS sites may be selected, the selecting the SNS site may include uploading the selected image file to the plurality of SNS sites in the order the SNS sites are selected.

In an exemplary embodiment, the method may include generating history information corresponding to the image file and saving the generated history information at a storage unit of the apparatus.

In an exemplary embodiment, the history information may be generated by the application, and generated according to one of a first image file generated through the image scanning apparatus and uploaded to the SNS site, a second image file generated through the image scanning apparatus and yet to be uploaded to the SNS site, and a third image file previously saved on a storage unit of the apparatus and uploaded on the SNS site.

In an exemplary embodiment, the uploading the selected image file comprises uploading the selected image file using an API corresponding to the selected SNS site.

In an exemplary embodiment, the selected image file may be scheduled to be uploaded to the SNS site.

In an exemplary embodiment, a period for which the selected image file is posted in the SNS site may be set according to a posting period included in the history information.

In an exemplary embodiment, an apparatus connectable to an image scanning apparatus is provided, which may include a communication interface unit connectable to the image scanning apparatus, a control unit which controls the communication interface unit, and a storage unit, wherein the control unit controls the application to select the image file and the SNS site from a user interface screen provided by the application displayed on the display unit of the apparatus, and upload the selected image file to the selected SNS site. The image file for selection may be generated by scanning at the image scanning apparatus, or previously saved at the storage unit of the apparatus.

In an exemplary embodiment, the control unit may request through the communication interface unit that the image scanning apparatus generate the image file.

In an exemplary embodiment, the control unit may control the selected image file so as to be transmitted to the SNS site via the communication interface unit.

In an exemplary embodiment, the control unit may control a configuration setting for login to the SNS site is performed, and upon login, the SNS site, to which the image file is uploaded, is displayed on a web browser screen displayed on the display unit.

In an exemplary embodiment, the display unit may be an all-in-one apparatus.

According to an exemplary embodiment, a method is provided for uploading an image file to a social network service (SNS) site using an apparatus connectable to an image scanning apparatus, which may include: requesting through an application executed on the apparatus to generate the image file at a scan unit of the image scanning apparatus, receiving from the image scanning apparatus the generated image file, selecting a SNS site to which the received image file is uploaded, and uploading the received image fie to the selected SNS site.

In an exemplary embodiment, the method may include logging in the SNS site, wherein, by the login to the SNS site, the SNS site, to which the image file is uploaded, may be displayed on a web browser screen executed on the apparatus.

In an exemplary embodiment, if a plurality of SNS sites may be selected, the selecting the SNS site may include uploading the selected image file to the plurality of SNS sites in the order the SNS sites are selected.

According to one aspect of the invention, a method is provided for uploading an image file to a social network service (SNS) site using an apparatus connectable to an image scanning apparatus, which includes: displaying, by an application executed on the apparatus, history information on a user interface displayed on a display unit of the apparatus, selecting an image file displayed on the history information, selecting a SNS site, and uploading the selected image file to the selected SNS site. The history information is generated by the application, and generated according to one of a first image file generated through the image scanning apparatus and uploaded to the SNS site, a second image file generated through the image scanning apparatus and yet to be uploaded to the SNS site, and a third image file previously saved on a storage unit of the apparatus and uploaded on the SNS site.

In an exemplary embodiment, the method may include logging in the SNS site, and displaying the SNS site, to which the selected image file is uploaded, on a web browser screen executed on the apparatus.

In an exemplary embodiment, the history information may be provided in an image type or a list type, wherein the image type history information displays a thumbnail image corresponding to the image file on the user interface screen displayed on the apparatus, and the list type history information displays texts corresponding to the image file.

In an exemplary embodiment, the selecting the SNS site may include distinctively displaying the SNS site depending on whether the selected image file is uploadable or not.

In an exemplary embodiment, the uploading the selected image file may include uploading the selected image file to the SNS site using an API corresponding to the selected SNS site.

In an exemplary embodiment, the uploading the selected image file may include scheduled uploading to the SNS site.

In an exemplary embodiment, the uploading the selected image file may include setting a posting period during which the selected image file is posted on the SNS site.

According to another aspect of the invention, an apparatus connectable to an image scanning apparatus is provided, which includes a communication interface unit connectable to the image scanning apparatus, a control unit which controls the communication interface unit, and a storage unit. The control unit controls the application to display history information on a user interface screen provided by the application displayed on a display unit of the apparatus, select an image file from the displayed history information, and select a SNS site so that the selected image file to the selected SNS site, and the history information is generated by the application.

In an exemplary embodiment, the history information may be generated according to a first image file generated through the image scanning apparatus and uploaded to the SNS site, a second image file generated through the image scanning apparatus and yet to be uploaded to the SNS site, and a third image file previously saved at the storage unit of the apparatus and uploaded to the SNS site.

In an exemplary embodiment, the control unit may control a selected image file so as to be transmitted to the SNS site via the communication interface unit using an API corresponding to the SNS site.

In an exemplary embodiment, the control unit a log into the SNS site, and upon login, to display the SNS site, to which the image file is uploaded, on a web browser screen displayed on the display unit.

In an exemplary embodiment, the display unit may be an all-in-one apparatus.

According to an exemplary embodiment, a method is provided for uploading an image file to a social network service (SNS) site using anapparatus connectable to an image scanning apparatus, which may include: selecting, by an application executed on the apparatus, an image file to be uploaded to the SNS site from a user interface screen displayed on a display unit of the apparatus, selecting a SNS site, and uploading the selected image file to the selected SNS site. The image file for selection may be previously saved at a storage unit of the apparatus by the application.

In an exemplary embodiment, an apparatus for uploading an image file generated by scanning at an image scanning apparatus to a selected SNS site, and a method thereof for uploading the image file to the SNS site are provided.

In an exemplary embodiment, an apparatus for selecting an image file saved at a storage unit of the apparatus and uploading the image file to a selected SNS site, and a method thereof for uploading the image file to the SNS site are provided.

In an exemplary embodiment, an apparatus for saving history information corresponding to an image file generated at an image scanning apparatus or to an image file previously saved at the apparatus and loaded, and a method thereof for uploading the image file to the SNS site are provided.

In an exemplary embodiment, an apparatus for uploading a selected image file to a selected SNS site by scheduled uploading, and a method thereof for uploading the image file to the SNS site are provided.

In an exemplary embodiment, an apparatus for loading saved history information using scan application and selecting an image file from the history information, and a method thereof for uploading the image file to the SNS site are provided.

In an exemplary embodiment, an apparatus for generating an image file at an image scanning apparatus using one application and uploading the generated image file to a selected SNS site, and a method thereof for uploading the image file to the SNS site are provided.

The above and/or other aspects of the present inventive concept will be more apparent by describing certain exemplary embodiments of the present inventive concept with reference to the accompanying drawings, in which:
FIG. 1 is a schematic block diagram of an apparatus according to an exemplary embodiment;
FIG. 2 is a schematic flowchart illustrating a method for uploading an image file of an apparatus to a social network service (SNS) site, according to an exemplary embodiment;
FIGS. 3 to 13 are views for illustrating a method for uploading an image file of an apparatus to a SNS site according to an exemplary embodiment;
FIG. 14 is a view illustrating login setting of an apparatus to a SNS site according to an exemplary embodiment;
FIG. 15 is a schematic flowchart illustrating a method for uploading an image file of an apparatus to a SNS site according to another exemplary embodiment; and
FIGS. 16 to 22 are views illustrating a method for uploading an image file of an apparatus to a SNS site according to another exemplary embodiment.

In the following description, same drawing reference numerals are used for the same elements even in different drawings. The matters defined in the description, such as detailed construction and elements, are provided to assist in a comprehensive understanding of the present inventive concept. Accordingly, it is apparent that the exemplary embodiments of the present inventive concept can be carried out without those specifically defined matters. Also, well-known functions or constructions are not described in detail since they would obscure the invention with unnecessary detail.

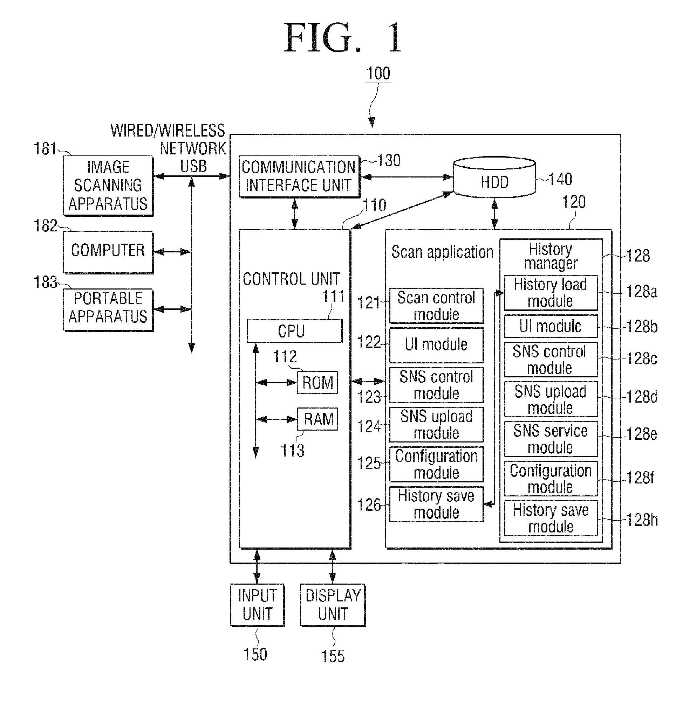

FIG. 1 is a schematic block diagram of an apparatus according to an exemplary embodiment.

Referring to FIG. 1, the apparatus 100 according to an exemplary embodiment may be connected to a wired or wireless network. Further, the apparatus 100 may be connected to a USB interface (not illustrated).

The apparatus 100 may be connected to an image scanning apparatus 181, a computer 182 or a portable apparatus 183 using the wired/wireless network and USB interface (not illustrated).

The image scanning apparatus 181 operates to scan an image (e.g., photo, film, or the like) and generate image data. For example, the image scanning apparatus 181 may include a scanner, a facsimile, or a multi-function peripheral (MFP). The "computer" 182 herein may include not only a personal computer, but also a server that has a SNS site described in the exemplary embodiment. The "portable apparatus" 183 herein may be an apparatus that can be carried around and may include a mobile phone, a smart phone, a digital camera, an e-book reader, a table PC, or a portable storage medium (e.g., USB memory, memory card, etc.), but not limited thereto. The term "external apparatus" may be in reference to the image scanning apparatus 181, computer 182 or portable apparatus 183.

According to an exemplary embodiment, the image scanning apparatus 181 may include a mobile phone, a smart phone, a digital camera or a tablet PC that has a camera unit (not illustrated) capable of taking still images or video. The term "scan" herein may refer to capturing or taking an image. Image data having file extension such as "jpg," "tiff," or the like refers to an image file. The image data generated at the image scanning apparatus 181 may be transmitted to the apparatus 100 to be saved as an image file at a storage unit (not illustrated), or saved in a storage unit (not illustrated) of the image scanning apparatus 181 as an image file and transmitted to the apparatus 100. The term "image file" herein includes image data.

The apparatus 100 may include a control unit 110, a scan application 120, a communication interface unit 130, and a hard disk drive 140 (HDD). The scan application 120 may include a scan control module 121, a user interface module 122, a SNS control module 123, a SNS upload module 124, a configuration module 125, or a history save module 126. Further, the scan application 120 may include a history load module 128a, a user interface module 128b, a SNS control module 128c, a SNS upload module 128d, a SNS service module 128e, a configuration module 128f, and a history manger 128 including a history save module 128h. Further, the apparatus 100 may be connected to an input unit 150 or a display unit 155.

The control unit 110 may include a CPU 111, a ROM 112 storing therein a control program to control the apparatus 100, and a RAM 113 to record a signal or data inputted from outside the apparatus 100, or used as a memory area for the operation performed at the apparatus 100. The CPU 111 may include a single core, a dual core, a triple core, or a quad core depending on the number of CPU cores. The CPU 111, the ROM 112 and the RAM 113 may be connected to each other via internal bus. The term "storage" herein may refer to a memory card (e.g., SD card, memory stick, or the like, although not illustrated) mounted inside the control unit 110. The storage unit may include a non-volatile memory, a volatile memory, a HDD or a solid state drive (SSD).

The control unit 110 may control the scan application 120, the communication interface unit 130, the HDD 140, the input unit 150, and the display unit 155. Further, the control unit 110 may control an external apparatus through the communication interface unit 130. For example, the control unit 110 may control an application so that the image file scanned at the image scanning apparatus 181 or the image file saved in the storage unit of the external apparatus is read out and displayed on the display unit 155, or the image file saved in the storage unit of the apparatus 100 is saved in the storage unit of the external apparatus.

The scan application 120 may include a scan control module 121, a user interface module 122, a SNS control module 123, a SNS upload module, a configuration module 125 and a history save module 126.

The scan control module 121 may search the connectable image scanning apparatus 181 using the control unit 110 and the communication interface unit 130, and control the searched image scanning apparatus 181. The scan control module 121 requests the image scanning apparatus 181 to scan (e.g., pre-scan or scan) an image placed on a scan unit (not illustrated) of the image scanning apparatus 181 and to generate image data. The scan control module 121 controls image data generated at the image scanning apparatus 181 to be transmitted to the communication interface unit 130 of the apparatus 100. The image data received through the communication interface unit 130 may be saved in the storage unit of the apparatus 100 as an image file. The scan control module 121 controls the image data generated at the image scanning apparatus 181 to be saved as an image file and then transmitted to the apparatus 100.

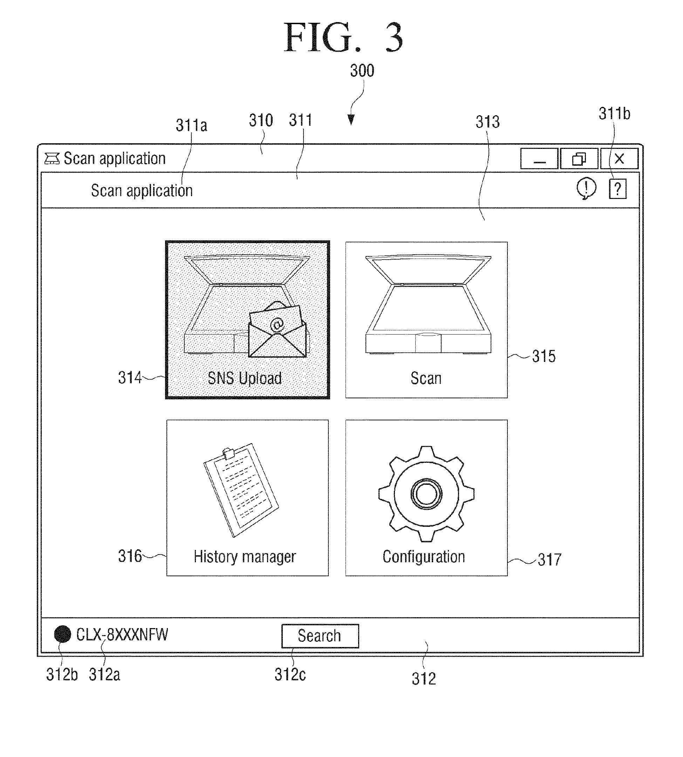

The UI module 122 provides UI of the scan application 120 which is displayed on the display unit 155. The UI may include interface to facilitate interaction between user and the apparatus 100, such as graphics (including icon or text) provided to help the user to use the apparatus 100 with convenience, gesture or voice. The image scanning apparatus is searched and a list of found image scanning apparatuses is displayed on the UI screen which is provided by the UI module 122. An image file to e uploaded to the SNS site is displayed and selected by the user. The SNS site, to which the image file is to be uploaded, is displayed and selected by the user. The result of uploading the image file to the selected SNS site may be displayed. FIGS. 3 to 7 and FIGS. 10 to 14 illustrate examples of the UI screen provided by the scan application 120 according to exemplary embodiments.

The SNS control module 123 searches the SNS site connectable to the apparatus 100 using the control unit 110 and the communication interface unit 130, and controls the apparatus 100 to log in the searched SNS site. The SNS control module 128c exerts control so that if an image file is completely uploaded to the SNS site logged in by the user with ID and password, the SNS site, to which the image file is uploaded, is displayed on the display unit 155 of the apparatus 100 through web browser.

The SNS upload module 124 may upload at least one selected image file (e.g., one image file or a plurality of image files) to at least one selected SNS site (e.g., one SNS site or a plurality of SNS sites). The SNS upload module 124 may upload at least one image file using an Application Programming Interface (API) corresponding to the selected SNS site. The "selected image file" herein refers to an image file scanned through the image scanning apparatus 181 and saved in the apparatus 100, or an image file previously saved in the storage unit of the apparatus 100.

If the selected SNS site supports only text, the image file may be uploaded to a separate site, instead of the selected SNS site. On the SNS site displayed on the executed web browser, the link information (e.g., Uniform Resource Locator; URL) may be displayed regarding the image file saved in the separate site. If the displayed link information of the image file may be selected, the image file saved in the separate site may be displayed on the web browser. If the selected SNS site supports images, the SNS site, to which the image file is uploaded, may be displayed on the web browser. The SNS control module 123 and the SNS upload module 124 may be implemented as one SNS module (not illustrated).

The configuration module 125 sets configuration corresponding to the scan application 120. The configuration module 125 may set SNS login (e.g., ID and password corresponding to the SNS site) to log in the SNS site. By way of example, one SNS site may be selected and ID and password may be inputted, or a plurality of SNS sites may be selected and same ID and password may be set. The SNS control module 123 may log in the corresponding SNS site using the set ID and password. If the configuration module 125 does not set the ID and password corresponding to the selected SNS site, it is necessary to manually input the ID and password corresponding to the SNS site to upload the image file to the SNS site.

The configuration module 125 may set a scan option which corresponds to scanning (including pre-scanning). The configuration module 125 may set image type (e.g., color, gray, etc.), document size (e.g., A5, A4, 4"X6" photo, etc.), resolution (e.g., 300 dpi), file type (e.g., file extension such as bmp, jpg, pdf, tif, etc.) of the image file generated at the image scanning apparatus 181.

The history save module 126 saves history, for example, of the image file, which is generated at the image scanning apparatus or previously saved in the storage unit and uploaded to the SNS site, or generated at the image scanning apparatus and saved in the storage unit of the apparatus 100 (e.g., image file which is not uploaded to SNS site).

The saved history may include more than one of: save date, save location (e.g., c:/temp/), file name, file format, size of image file (e.g., 240 KB), reserved setting, posting period, or uploaded SNS site name (e.g., Twitter®, Facebook®, etc.). The history save module 126 may save ID and path information (e.g., <http://twitpic.com/5vnxy5>) of the uploaded image file on the SNS site as the history. The history manager 128 may delete the uploaded file from the SNS site using the SNS login setting set at the configuration module and the path information of the history which is saved in the history save module 126.

The history save module 126 may save the history to the storage unit of the apparatus 100 or to a storage unit (not illustrated) of an external apparatus via the communication interface unit 130. Further, the history save module 126 may save the history as a markup language including extended Markup Language (XML), or text file having file extensions such as txt, rtf, or the like. The history save module 126 may update periodically (e.g., at one hour or one day interval).

The history manager 128 may include a history load module 128a, a UI module 128b, a SNS control module 128c, a SNS upload module 128d, a SNS service module 128e, a configuration module 128f, and a history save module 128g.

The history manager 128 may read out the saved history from the history save module 126 and upload an image file, which is generated at the image scanning unit 181 and previously saved in the storage unit instead of being uploaded to the SNS site, or upload an image file, which has previously been uploaded to SNS site, again to the SNS site (e.g., to the same or different SNS site).

The history load module 128a may read out history saved in the history save module 126 and display on the display unit 155. The history may be displayed by the history load module 128a if the history manager task 316 is executed on the home screen 300.

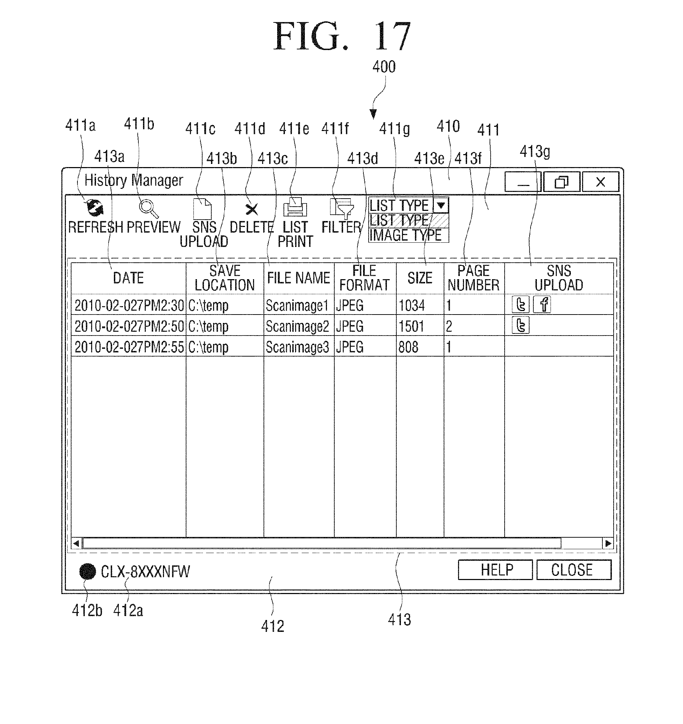

The UI module 128b provides a UI screen of the history manager 128 displayed on the display unit 155. On the UI screen provided by the UI module 128b, the history read out by the history load module 128a, i.e., more than one of save date, save location, file name, file format, and file size, is displayed. An image file to be uploaded to the SNS site may be selected by the user. The SNS site to which the image file is to be uploaded is displayed and selected by the user. The result of uploading the image file to the selected SNS site may be displayed. FIGS. 17 to 19 and FIG. 21 illustrate examples of the UI screen provided by the scan application 120 according to exemplary embodiments.

The SNS control module 123c searches the SNS site connectable to the apparatus 100 using the control unit 110 and the communication interface unit 130, and exerts control so that the apparatus 100 logs in the searched SNS site. The SNS control module 128c exerts control so that if an image file is completely uploaded to the SNS site logged in by the user with ID and password, the SNS site, to which the image file is uploaded, is displayed on the display unit 155 of the apparatus 100 through web browser.

The SNS upload module 128d may upload at least one image file (e.g., one image file or a plurality of image files) selected from the displayed history to at least one selected SNS site (e.g., one SNS site or a plurality of SNS sites). It is possible to upload to the SNS site registered to the history (e.g., SNS site to which file has been previously uploaded). The SNS upload module 128d of the history manager is substantially identical to the SNS control module 124, and accordingly, detailed description thereof will be omitted for the sake of brevity. The SNS control module 128c and the SNS upload module 128d of the history manager 128 may be implemented as one SNS module (not illustrated).

The SNS service module 128e uploads at least one selected image file to the selected SNS site in accordance with the inputted information about the scheduled date and time for transmission, using the SNS upload module 128d. The SNS service module 128e may delete the image file uploaded to the SNS site using the saved history and a delete API corresponding to and the selected SNS site. The SNS service module 128e may delete at least one image file from the selected SNS site as the posting period expires, using the saved history and the delete API corresponding to the selected SNS site. If there is no corresponding delete API in the SNS site, the SNS service module 128e may delete the image file uploaded to the SNS site.

The configuration module 128f sets configuration setting regarding the history manager 128. The configuration module 128f may set a display type (e.g., one of text and image) of the displayed history. Since the configuration module 128f of the history manager 128 is substantially identical to the configuration module 125, detailed description thereof will be explained for the sake of brevity.

The history save module 128g may store the history of the image file which is changed at the history manager 128. Since the history save module 128g of the history manager 128 is substantially identical to the history save module 126, detailed description thereof will be explained for the sake of brevity.

The SNS control module 123 of the scan application 120 and the SNS control module 128c of the history manager 128, the SNS upload module 124 of the scan application 120 and the SNS upload module 128d of the history manager 128, or the history save module 126 of the scan application 120 and the history save module 128h of the history manager 128 may be implemented as a common module (not illustrated). The common module (not illustrated) may be used by the scan application 120 and the history manager 128.

The communication interface unit 130 may be connected to an external apparatus by wired/wireless network or USB interface. The apparatus 100 requests the image scanning apparatus 181 via the communication interface unit 130 to scan an image and generate an image file corresponding to the scanned image according to control by the control unit 110 or the scan application 120. According to the control by the control unit 110 or the scan application 120, the image scanning apparatus 181 sends the generated image file to the communication interface unit 130. The apparatus 100 may request the image file saved at the storage unit (not illustrated) of the external apparatus via the communication interface unit 130 according to the control by the control unit 110 or the scan application 120. The image scanning apparatus 181 may send the saved image file to the communication interface unit 130. Further, according to the control by the control unit 110 or the scan application 120, the generated history may be saved at the storage unit (not illustrated) of the external apparatus via the communication interface unit 130. According to the control by the control unit 100 or the scan application 120, the history saved at the storage unit (not illustrated) of the external apparatus may be loaded to the apparatus 100.

The user may input commands to operate the apparatus 100 through the input unit 150 connected to the apparatus 100. The input unit 150 may include not only keyboard, mouse or touch screen (not illustrated), but also various hardware or software modules.

The display unit 155 is connected to the apparatus 100 and displays icons (not illustrated) corresponding to the applications supported by the apparatus 100. In an exemplary embodiment, the display unit 155 may display the UI screens corresponding to the scan application 120 or the history manager 128.

The display unit 155 may be implemented as a CRT monitor (not illustrated) or TFT-LCD monitor (not illustrated) displaying the above-mentioned contents, or a touch screen which displays not only the above-mentioned contents, but also inputs by the user. If the display unit 155 is implemented as the touch screen, the apparatus 100 may have an integrated (i.e., unseparable) form of the input unit 150 and the display unit 155. Further, the display unit 155 may be implemented as a part of the apparatus 100 which may be implemented as the all-in-one apparatus.

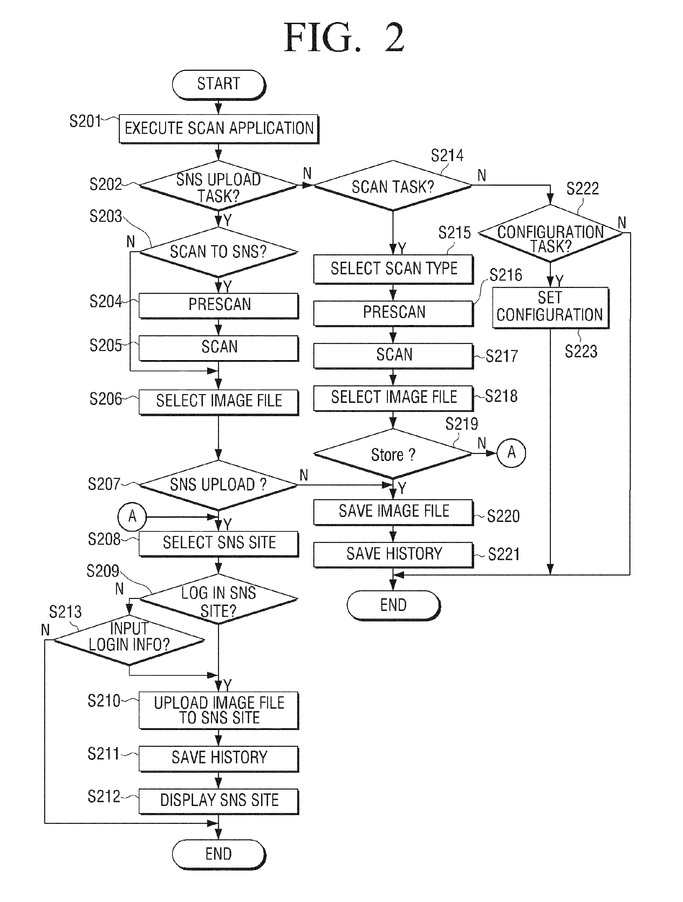

FIG. 2 is a schematic flowchart illustrating a method for uploading an image file of an apparatus to a social network service (SNS) site, according to an exemplary embodiment.

At S201, a scan application is executed.

FIGS. 3 to 13 are views for illustrating a method for uploading an image file of an apparatus to a SNS site according to an exemplary embodiment.

The scan application 120 is executed, if the user selects an icon (not illustrated) corresponding to the scan application 120 displayed on a background screen, or selects an icon (not illustrated) corresponding to the scan application 120 displayed on a taskbar. If the scan application 120 is executed, the first screen 300 ("home screen") provided by the scan application 120 is displayed on the display unit 155. According to an exemplary embodiment, in consideration of security, the scan application may be executed if the incoming user ID and password match previously-stored user ID and password.

At S202 (see, for example, FIG. 2), the SNS upload task may be selected.

Referring to FIG. 3, the home screen 300 includes a title area 310 which displays the name of the scan application, a first information area 311 which may be placed lower than the title area 310 and which displays a program name 311a (e.g., scan application), a second information area 312 which may be placed lower than the first information area 311 and which contains a model name 312a of the connected image scanning apparatus 181a and a connection state icon 312b that indicates connection state with the connected image scanning apparatus by changing color or shape thereof, and a task display area 313 which may be placed between the first and second information areas 311, 312 and which displays tasks 314 to 317 provided by the scan application 120. The first information area 311 may include a help button 311b. The second information area 312 may include a search button 312C which searches the connectable image scanning apparatus 181. If a plurality of image scanning apparatus are searched, a corresponding list (not illustrated) of image scanning apparatuses is displayed and one image scanning apparatus may be selected from the list. Referring to FIG. 3, a SNS upload task 314, a scan task 315, a history manager task 316 and a configuration set task 316 are displayed. The tasks 314 to 317 may be added to or deleted from the task display area 313 according to setting by the configuration set task 316.

The SNS upload task 314 may be selected from the task display area 313 of the home screen 300 through the input unit 150 or by touching (if the display unit 155 is a touch screen). The selected SNS upload task 314 may be distinctively displayed from the other tasks 315 to 317 on the task display area 313.

At S203 (see, for example, FIG. 2), the Scan-to-SNS may be selected.

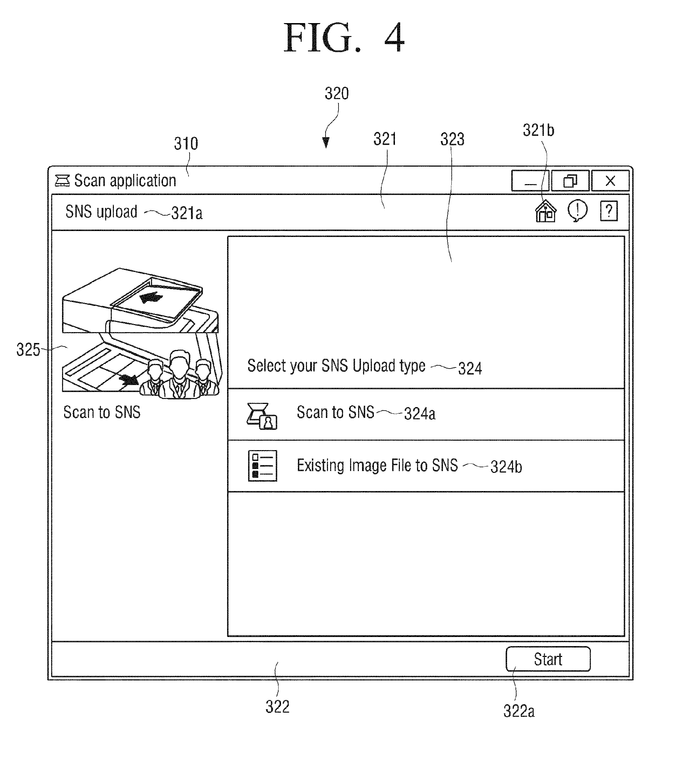

Referring to FIG. 4, the SNS upload task screen 320 may include a title area 310 which displays the name of the scan application, a first information area 321 which may be placed lower than the title area 310 and which displays a task name 321a (e.g., SNS upload) and a home button 381b which moves from the SNS upload task screen 320 to the home screen 300, a second information area 322 which may be placed lower than the first information area 311 and which contains a start button 322a that starts a corresponding task when one of SNS upload types 324a, 324b may be selected, and a task display area 323 which may be placed between the first and second information areas 321, 322 and which displays the SNS upload type 324 provided by the SNS upload task 314. The SNS type display area 323 displays a plurality of SNS upload types including "SNS scan 324a", and "existing image file to SNS". The task types 324a to 324b may be added to or deleted from the SNS upload type display area 323 according to setting by the configuration set task 316.

A SNS scan 324a may be selected from the task type display area 323 of the SNS upload task screen 320 through the input unit 150 or by touching (if the display unit 155 is a touch screen). The selected SNS scan 324a may be distinctively displayed from the other task types 324b on the task type display area 323. Further, if a cursor may be placed on the SNS scan 324a, an icon 325 corresponding to the SNS scan 324a on which the cursor may be placed, may be displayed on a side of the task type display area 323.

If the start button 322a of the second information area 322 may be selected, the SNS scan 324a starts. If the SNS scan 324a of the task type display area 323 may be selected, the SNS scan 324a may start without requiring selecting on the start button 322a. If the SNS upload 324b of the stored image file may be selected on the task type display area 323 of the SNS upload task screen 320, operation advances to S206.

At S204 (see, for example, FIG. 2), prescan is performed.

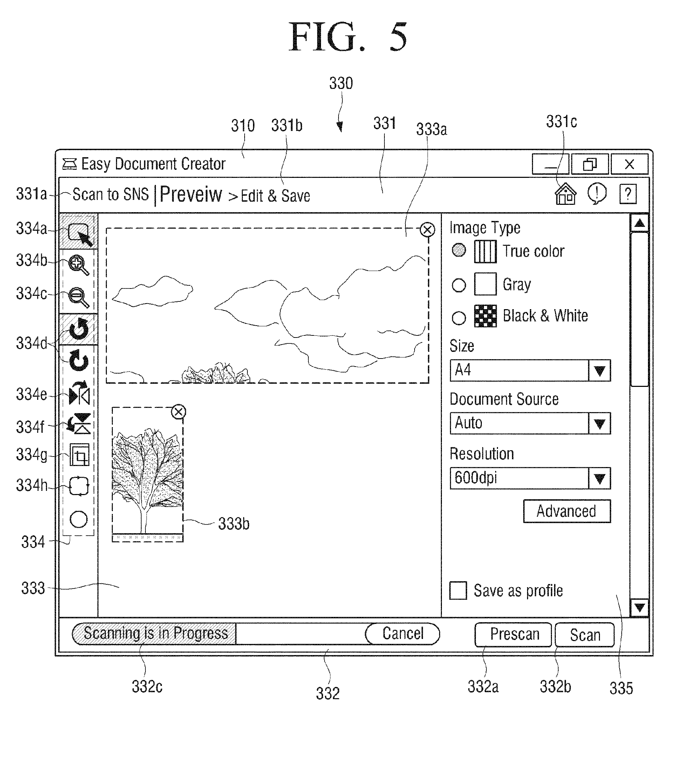

Referring to FIG. 5, a prescan screen 330 includes a title area 310 which displays the name of the scan application, a first status area 331 which may be placed lower than the title area 310 and which displays a task name 331a, a step indicator 331b, and a home button **331c** to move from the prescan screen 330 to the home screen 300, a second status area 332 which may be placed lower than the first status area 331 and which contains a prescan button 332a to start prescan of the image scanning apparatus 181, a scan button 332b to start scanning, and a progress bar 332c to indicate progress of the prescan, and a preview area 333 which may be placed lower than the first status area 331 and displays an image file prescanned at the image scanning apparatus 181.

The prescan screen 330 may include at least one of a toolbar area 334 which may be placed on a side of the preview area 333 and which displays an edit tool to edit the prescanned image file, and an option area 335 which may be placed on a side of the preview area 333 and sets prescan or scan option for the image file. The prescan screen 330 may ⁱnclude one of the toolbar area 334 and the option area 335 or both.

Referring to FIG. 5, the step indicator 331b displays "Prescan > Edit & Save" which indicates prescanning step. If the image scanning apparatus 181 starts prescanning, mark ">" blinks on the step indicator 331b. If prescanning is finished, mark ">" stops blinking on the step indicator 331b. However, "blinking" is only an example of a variety of indicating effects, and the indicating effect may change depending on needs.

If an option (e.g., image type, size, or resolution) for prescan is set on the option area 335 and then the prescan button 332a may be selected on the second status area 332, the scan application 120 or the control unit 110 requests the image scanning apparatus 181 via the communication interface unit 130 to prescan an image placed on a flatbed (not illustrated) or auto document feeder (ADF) according to the options set at the option area 335. The image scanning apparatus 181 may prescan the image according to the set options, and send the generated image file to the communication interface unit 130.

The image file received from the image scanning apparatus 181 may be temporarily stored at the storage unit of the apparatus 100. The image file temporarily stored at the storage unit of the apparatus 100 is displayed on the preview area 333. The progress of the image file 333a displayed on the preview area 333 may be indicated by the progress bar 332c on the second status area 332. Indicating the progress of prescan may include prescanning at the image scanning apparatus 181, transmission of the generated image file to the apparatus 100, and image processing of the image file received at the apparatus 100. The prescanning, transmitting and image processing may be distinctively displayed from each other.

The image file 333a may be displayed on the preview area 333 according to the progress as indicated by the progress bar 332c. By way of example, if the progress bar 332c indicates that the job is completed 50% (with ±5% error, for example), 50% of the prescanned image file 333a may be displayed according to the progress as indicated by the progress bar 332c.

The image file 333a displayed on the preview area 333 may be edited using edit tools 334a to 334h of the toolbar area 334. The toolbar area 334 may display a plurality of edit tools including: an area designation 334a, enlargement 334b, reduction 334c, rotation 334d, horizontal symmetry 334e, vertical symmetry 334f, cutting 334g, or multi-crop 334h. Further, a plurality of image files 333a, 333b may be displayed through multi selection on the preview area 333.

At S205 (see, for example, FIG. 2), scanning is performed.

Referring to FIG. 5, if an image file (333a, for example) displayed on the preview area 333 may be selected, followed by setting of options for scanning (e.g., image type, size or resolution) and selecting of a scan button 332b on the second status area 332, the scan application 300 or the control unit 110 requests the image scanning apparatus 181 via the communication interface unit 130 to scan an image placed on the flatbed or the ADF (not illustrated) of the image scanning apparatus 181 according to set options. The image scanning apparatus 181 scans the image according to set options, and transmits the generated image file to the communication interface unit 130. The image file received from the image scanning apparatus 181 may be temporarily stored at the storage unit of the apparatus 100. The image file 343a temporarily stored at the storage unit of the apparatus 100 may be displayed on the preview area 343.

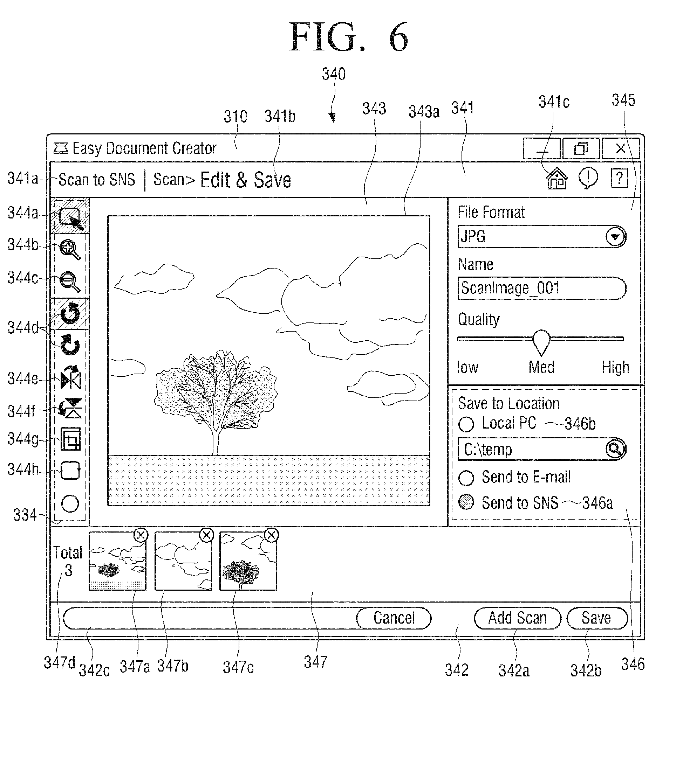

Referring to FIG. 6, the scan screen 340 may include a title area 310 which displays the name of the scan application, a first status area 341 which may be placed lower than the title area 310 and which displays a task name 341a, a step indicator 341b, and a home button 341c to move from the scan screen 340 to the home screen 300, a second status area 342 which may be placed lower than the first status area 341 and which contains a save button 342b to save the displayed image file 343a, an additional scan button 342a to scan through the image scanning apparatus 100, and a progress bar 342c to indicate scanning progress, and a preview area 343 which may be placed lower than the first status area 341 and displays an image file scanned at the image scanning apparatus 181. The scan screen 340 may include at least one of a toolbar area 344 which may be placed on a side of the preview area 333 and which displays an edit tool to edit the scanned image file, an option area 345 which may be placed on a side of the preview area 333 to set scan option for the image file, and a save location area 346 to set the save location of the image file. By way of example, depending on the function(s) supported by the scan screen 340, the scan screen 340 may include the toolbar area 344, the option area 345, or the save location area 346 in combination.

The scan screen 340 may include thumbnail images 347a to 347c which are placed between the preview area 343 and the second status area 342 and which indicate the scanned image files, and a thumbnail image area 347 which displays a counter 347d to indicate the number of image files at the tasks in progress. A thumbnail image 347a corresponding to the last scanned image file 343a at the tasks in progress may be distinctively displayed from the other thumbnail images 347b, 347c on the thumbnail area 347. The number of thumbnail images displayed on the thumbnail area 347 may vary depending on setting by the configuration set task 316.

If the scan button 332b is selected, the image scanning apparatus 181 starts scanning, and the scan screen 340 of FIG. 6 may be displayed. The image file generated based on the scanning of the image scanning apparatus 181 is transmitted to the apparatus 100. The progress of scanning of the image file 343a displayed on the preview area 343 may be indicated by the progress bar 342c on the second status area 342. The scanning progress may include scanning step at the image scanning apparatus 181, transmitting of the generated image file, and image processing of the image file received at the apparatus 100. The scanning, transmitting and image processing may be distinctively displayed from each other.

The image file 343a may be displayed on the preview area 343 according to the progress as indicated by the progress bar 342c. By way of example, if the progress bar 342c indicates that the job is completed 100%, the completely scanned image file 343a of the image scanning apparatus 181 may be displayed on the preview area 343.

Referring to FIG. 6, the step indicator 341b displays 'Scan > Edit & Save' which indicates that the scanned image file is being displayed on the preview area 343 and edited. If the image scanning apparatus 181 is scanning, mark ">" blinks on the step indicator 341b. If scanning is finished, mark ">" stops blinking on the step indicator 341b. However, "blinking" is only an example of a variety of indicating effects, and the indicating effect may change depending on needs.

The image file 343a displayed on the preview area 343 may be edited using edit tools 344a to 344h of the toolbar area 344. The toolbar area 344 may display a plurality of edit tools including: an area designation 344a, enlargement 344b, reduction 344c, rotation 344d, horizontal symmetry 344e, vertical symmetry 344f, cutting 344g, or crop 344h.

At S206 (see, for example, FIG. 2), an image file may be selected.

Referring to FIG. 6, at least one may be selected from among a plurality of thumbnail images 347a to 347c displayed on the thumbnail area 347. The last scanned image file 343a may be selected on the preview area 343. If it is necessary to select a thumbnail image which is different from the selected image file 343a, the same may be selected from among the rest thumbnail images 347b, 347c on the thumbnail area 347 through the input unit 150 or touching.

If a plurality of thumbnail images 347a to 347c may be selected, same options (e.g., file format, save quality, or the like) of the option area 345 excluding the file name may apply. In an exemplary embodiment, one image file 343a may be selected.

At S207 (see, for example, FIG. 2), "send to SNS" may be selected.

Referring to FIG. 6, a save option corresponding to the selected image file 343a is set, and 'send to SNS' 346a may be selected from the save location area 346. The save location area 346 may include options regarding save location of the selected image file, such as 'save to local PC 346b', indicating the file is saved at the storage unit of the apparatus 100, and 'save location 346c'. Further, the selected image file 343a may also be at the storage unit of the external apparatus, as well as the storage unit of the apparatus 100. The selected image file 343a is saved at save location 346c (i.e., c:/temp/) under the name 'scanimage_001'. The save location 346c may change to other location of the storage unit.

At S208 (see, for example, FIG. 2), SNS site may be selected.

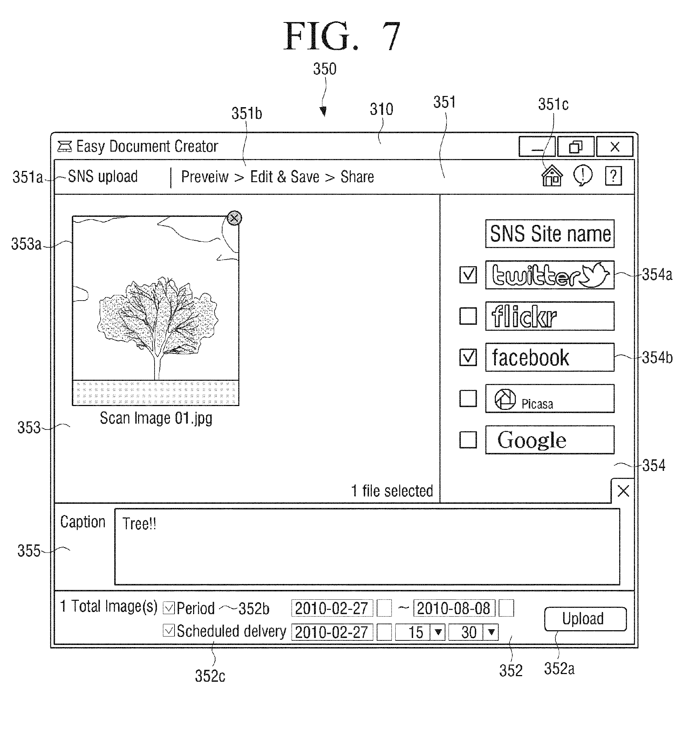

Referring to FIG. 7, the upload screen 350 may include a title area 310 which displays the name of the scan application, a first status area 351 which may be placed lower than the title area 310 and which displays a task name 351, a step indicator 351b, and a home button 351c to change from the upload screen 350 to the home screen 300, a second status area 352 which may be placed lower than the first status area 351 and which contains an upload button 352a, a posting period 352b of the uploaded image file, a scheduled delivery 352c to upload the selected image file 353a on scheduled date and time to the selected SNS site, and a preview area 353 which may be placed between the first and second status areas 351, 352 and which displays an image file uploaded to the SNS site. The upload screen 350 may be placed on a side of the preview area 353 and contain a SNS site list area 354 which indicates a list of SNS sites to which the image file is uploaded. Further, the upload screen 350 may optionally include a caption area 355 through which a caption of the uploaded image file is inputted.

Referring to FIG. 7, the step indicator 351b displays 'Scan > Edit & Save > Share', indicating that the selected image file is uploaded to the SNS site.

The SNS site list area 354 displays the SNS site (one or more SNS sites) to which the image file 353a on the preview area 353 is uploaded. If the upload button 352a of the second status area 352 may be selected, the image file 353a on the preview area 353 starts to be uploaded to the selected SNS site.

If a reservation setting (e.g., 2010-02-27, 16:30) may be selected regarding the selected image file 353a, the SNS service module 128e of the history manager 128 may upload the selected image file 353a to the selected SNS site on the scheduled date and time, using a timer (not illustrated) provided inside the apparatus 100. If a posting period (e.g., from 2010-02-27 to 2010-08-08) is set, the SNS service module 128e of the history manger 128 may cause the image file 353a to be deleted as the posting period at the uploaded SNS site expires, using a timer (not illustrated) provided inside the apparatus 100 and delete API.

If a plurality of SNS sites 354a, 354b may be selected from the SNS site list area 354, same image file 353a may be uploaded to a plurality of SNS sites. In one exemplary embodiment explained below, a plurality of SNS sites 354a, 354b may be selected. Referring to FIG. 7, only the SNS site that supports the image file 353a displayed on the preview area 353 can be displayed on the SNS site list area 354. By way of example, the SNS sites which support the file format (e.g., 'tiff) or file size (e.g., 3 MB) of the image file 353a may be distinctively displayed from the SNS sites which do not. Since the image file 353a can not be uploaded if the SNS sites do not support the image file 353a, it may be necessary to change the file format or file size of the image file 353a.

At S209 (see, for example, FIG. 2), login to SNS site is performed.

The scan application 120 or the control unit 110 logs in the selected SNS sites 354a, 354b of the SNS site list area 354 using SNS login setting 393 set at the configuration set task 316. With the saved SNS login setting 393, it is possible to set in advance the ID (e.g., email address) and password to log on the selected SNS sites 354a, 354b. The scan application 120 or the control unit 110 logs in the selected SNS site using the previously set ID and password. The previously set ID and password may be saved at the storage unit (e.g., automatic login) or the user may need to input the ID and password by himself (e.g., manual login). Referring to FIG. 7, upon logging on the SNS site, 'Scan > Edit & Save > Share', which is displayed on the step indicator 351b of the first status area 351, is displayed. Upon logging on the SNS site, the operation moves to S213.

At S210 (see, for example, FIG. 2), an image file is uploaded to the SNS site.

With logging on the SNS sites selected at S209, the selected image file 353a is sequentially uploaded to the selected SNS sites using API corresponding to the selected SNS sites.

For a site such as Twitter® which does not support image file uploading, the image file 353a may be uploaded to another site, such as Twitpic® and a notification message is transmitted to the site such as Twitter®.

An API for image file uploading (e.g., Upload API) is published at, for example, to Internet <URL:<http://twitpic.com/api.do>. The SNS upload module 124 sends HTTP request to <http://twitpic.com/api/uploadAndPost/> and receives a response, for example, from Twitpic®. Upon receiving a response, the SNS upload module 124 may upload the selected image file 353a to the Twitpic® using, for example, 'METHOD: <http://twitpic.com/api/uploadAndPost>. The image file is uploaded, for example, to the Twitpic®, and notification message is transmitted from the Twitpic® to the Twitter®. Timeline of the Twitter® displays link information (e.g., <http://twitpic.com/5vnxy5>) and caption (e.g., a tree!) corresponding to the image file uploaded to the Twitpic®.

If the image file 353a has a file format "jpg" and file size less than 4Mb, it is possible to upload to the site, for example, Twitpic®. If uploading of the image file 353a to the Twitpic® fails, a popup window (not illustrated) may appear on the upload screen 350 of FIG. 7.

If the selected SNS site is the site such as Facebook® that supports uploading of the image file, one in the art will be readily able to understand that it is possible to upload the image file to the selected Facebook® using Facebook C# SDK
(<http://facebooksdk.codeplex.com/>) and Graph API
(<http://developers.facebook.com/docs/reference/api/>).

At S211 (see, for example, FIG. 2), history is saved.

The history corresponding to the image file 353a uploaded to the SNS site (e.g., image file generated at the image scanning apparatus and uploaded, or image file previously saved at the storage unit) is saved at the storage unit of the apparatus 100. The history may include more than one of: save date, save location (e.g., c:/temp/), file name, file format, size of image file (e.g., 240 KB), or uploaded SNS site name (e.g., Twitter@, Facebook®, etc.). The history may be saved in markup language or as text file. The history may be loaded by the history manager 128. Using the history loaded by the history manager 128, it is possible to select the image file displayed on the history and upload the same to the SNS site.

If result of uploading the image file 353a is received from the SNS site, the history save module 126 may save the name of the SNS site which corresponds to the result of uploading as the history.

At S212 (see, for example, FIG. 2), SNS site is displayed.

If uploading of the image file 353a to the selected SNS site is successful, the scan application 300 executes the web browsers 360 (in numbers corresponding to the number of SNS sites to which the image file 353a is uploaded) installed on the apparatus 100 to be displayed on the display unit 155.

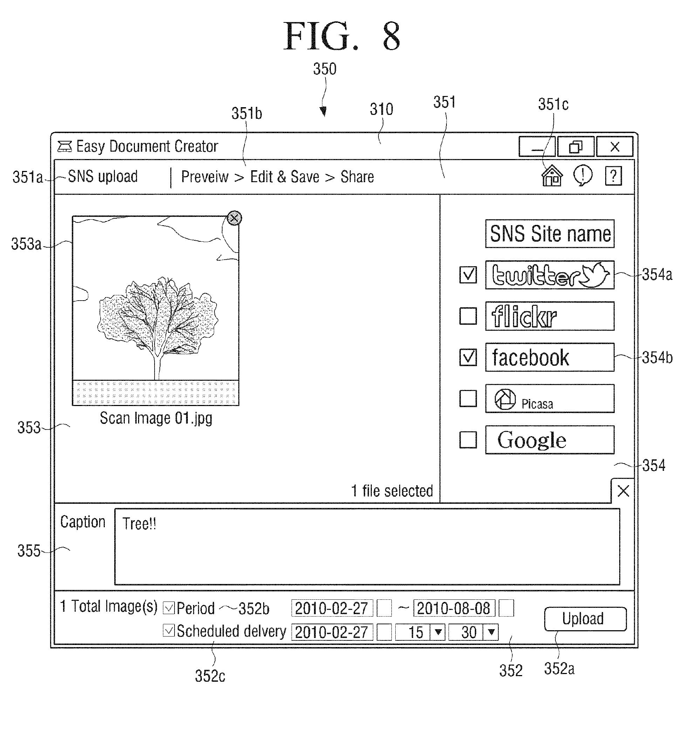

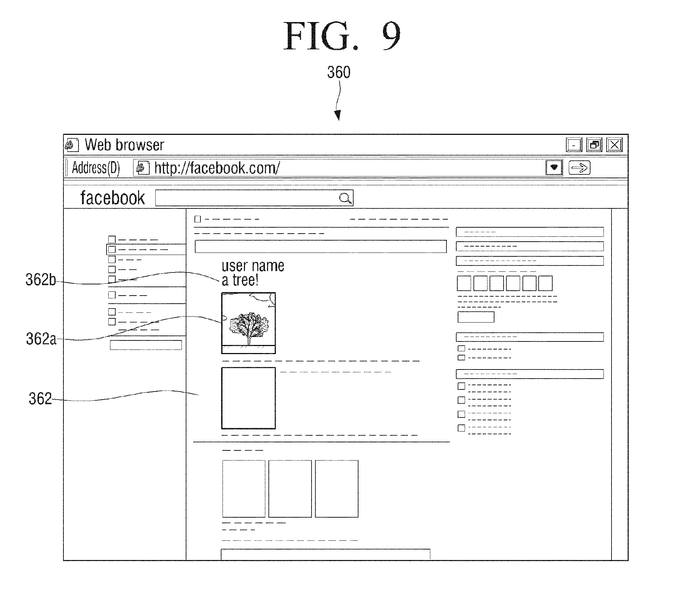

The time line and image file 353a are displayed on the web browser screens 361, 362 of the web browsers 360. Referring to FIG. 8, the web browser screen 361 displays the link information 361a and the caption 361b of the image file 353a uploaded to the Twitpic®. If the link information 361a may be selected, the image file 353a uploaded to the Twitpic® may be displayed. Referring to FIG. 9, the thumbnail image 362a and the caption 362b corresponding to the uploaded image file 353a are displayed on the web browser screen 362.

Part of the web browser 360 may be overlapped on the upload screen 350 of FIG. 7. The web browser 360 with transparency may be displayed on the upload screen 350. The degree of transparency of the web browser 360 may vary depending on the setting of the configuration set task 316.

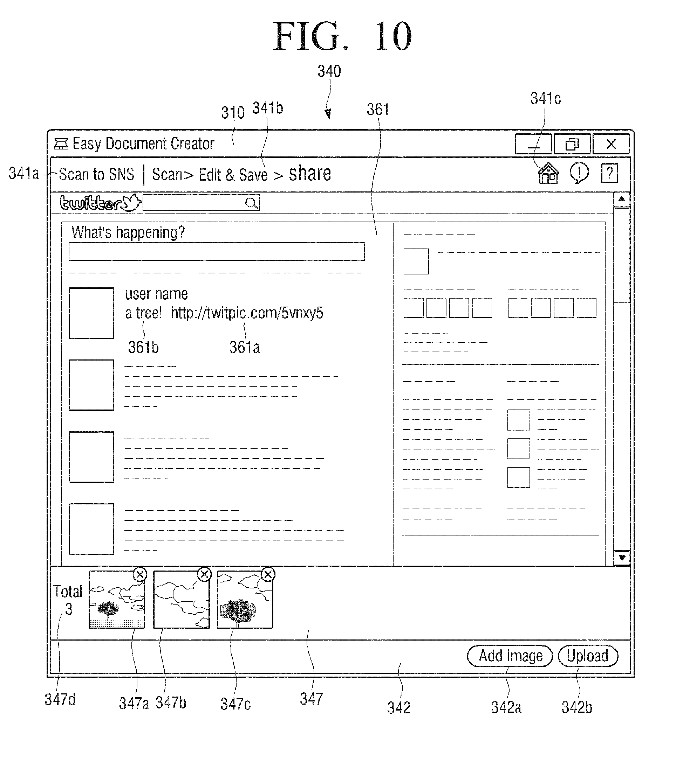

Referring to FIG. 10, if uploading of the image file 353a to the selected SNS site is successful, the scan application 120 may cause the web browser screens 361, 362 to be displayed instead of the preview area 343, the toolbar area 344, the option area 345 and the save location area 346 of the upload screen 350 (FIG. 6).

If there is an additional image file to be uploaded to the SNS site, it is possible to search the image file by selecting an image add button 342a. If the searched image file is displayed, it is possible to perform uploading step using an upload button 342b.

It will be readily understood that the SNS site is displayed and the history is saved at S211, S212, which are the steps of saving the history (S211) and displaying the SNS site (S212).

If the SNS site to which the image file 353a is uploaded is displayed on the web browser screens 361, 362 of the web browsers 360, the method of the SNS upload task for uploading an image file is completed.

Referring back to S203 (see, for example, FIG. 2), and referring to FIG. 4, if SNS scan is not selected, the SNS upload 324b of the saved image file may be selected from the task type display area 324. If SNS upload 324b of the saved image file may be selected, operation moves to S206.

At S206 (see, for example, FIG. 2), an image file may be selected.

It is possible to select a previously saved image file from the storage unit of the control apparatus 100 or from the storage unit of the external apparatus according to control by the scan application 120 or the control unit 110. A difference from SNS Scan 324a is that the prescanning step (S204) and scanning step (S205) are skipped. If the previously saved image file may be selected, the method for uploading previously saved image file to SNS site can be substantially identical to SNS uploading steps (S207 to S212) of the image file of the SNS scan 324a. Accordingly, detailed description thereof will be omitted for the sake of brevity.

Referring back to S209 (FIG. 2), if login to SNS site is unsuccessful, operation moves to step S213.

At S213 (see, for example, FIG. 2), login information is inputted.

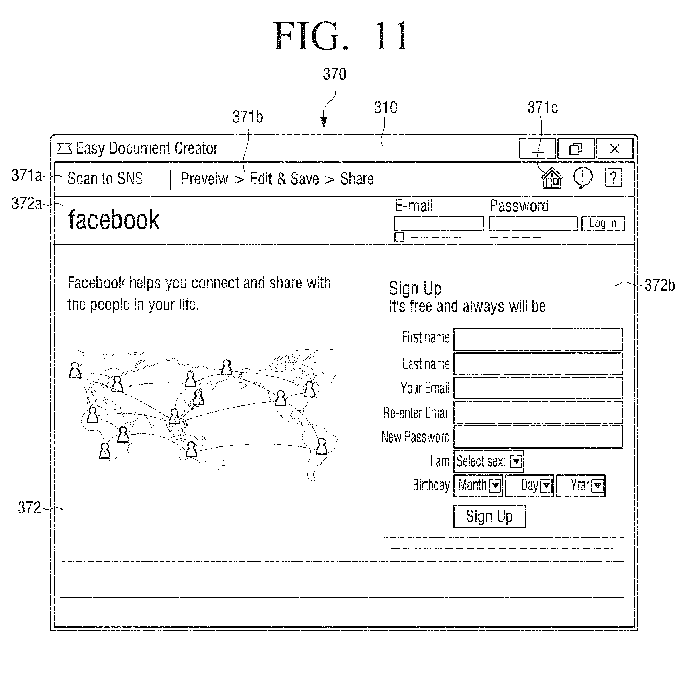

Referring to FIG. 11, the SNS login screen 370 may include a title area 310 which displays the name of the scan application, a first status area 371 which may be placed lower than the title area 310 and which contains a task name 371a, a step indicator 371b, and a home button 371c to change from the SNS login screen 370 to the home screen 300, and a login display area 372 which may be placed lower than the first status area 371 and which displays a login screen of the selected SNS site. The login display area 372 may include a subscriber area 372a through which a subscriber of the selected SNS site inputs his ID and password, and a new subscriber area 372b through which a visitor to the selected SNS site can subscribe to the selected SNS site.

If the subscriber of the selected SNS site has not set his ID and password at the configuration set task 316 yet, he may input his ID and password through the subscriber area 372a. If the user logs in the selected SNS site by inputting his ID and password, at S210, the image file is uploaded to the SNS site. A visitor to the selected SNS site may subscribe to the SNS site through the new subscriber area 372b, or stop uploading to the SNS site.

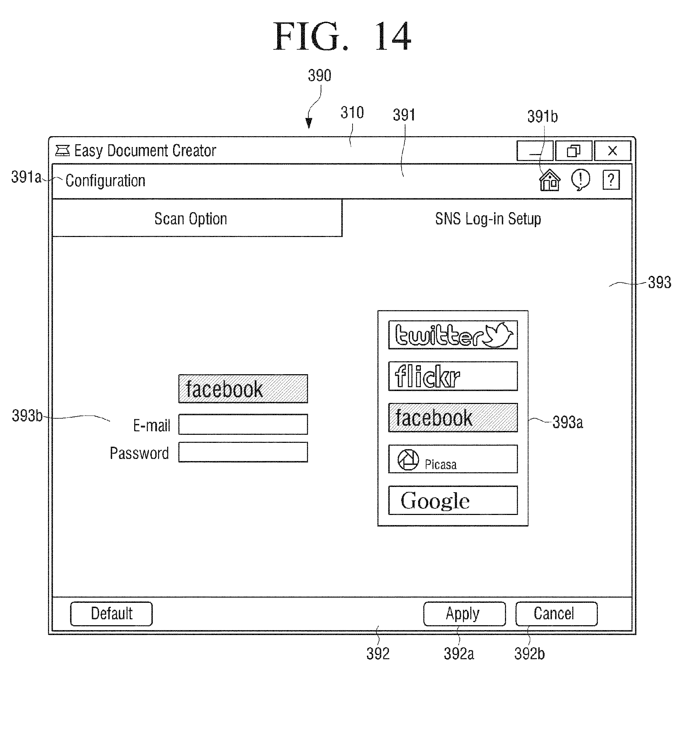

An example using a site such as Facebook® will be explained below with reference to FIG. 14. However, it will be readily understandable for those skilled in the art that the embodiment is also applicable to the other SNS sites.

At S213 (FIG. 2), instead of the SNS login screen 370 to help log in the SNS site, a popup window (not illustrated) may appear. The popup window (not illustrated) may be overlapped on the upload screen 350 of FIG. 7. The overlapped popup window (not illustrated) may be displayed in active state so as to be distinguished from the upload screen 350 in inactive state.

Going back to S202 (FIG. 2), if the SNS upload task is not selected, the operation advances to S214.

At S214 (see, for example, FIG. 2), scan task may be selected.

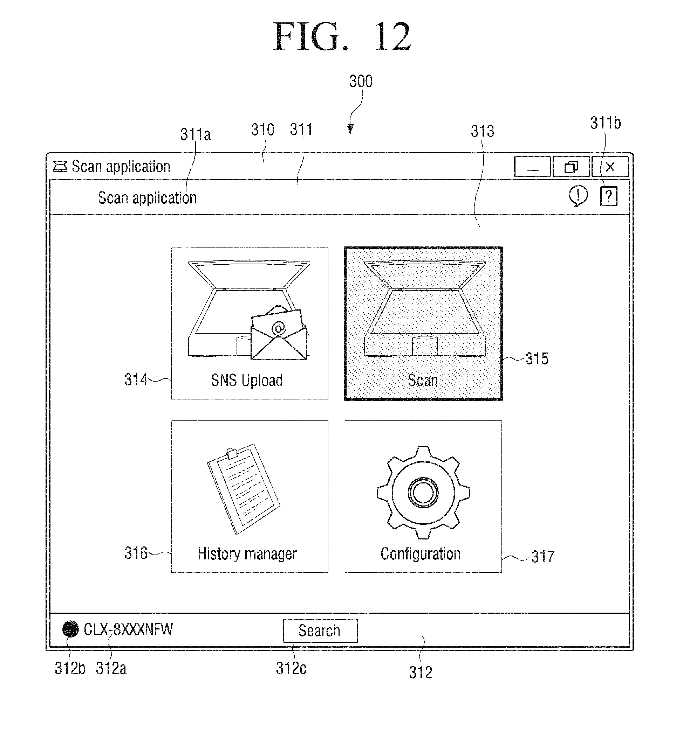

Referring to FIG. 12, the home screen 300 as illustrated in FIG. 3 is displayed, and the scan task 315 may be selected from the task display area 313. Since selecting the scan task 315 at S214 is substantially identical to the operation at S202, detailed description thereof will be omitted for the sake of brevity.

At S215 (see, for example, FIG. 2), scan type may be selected.

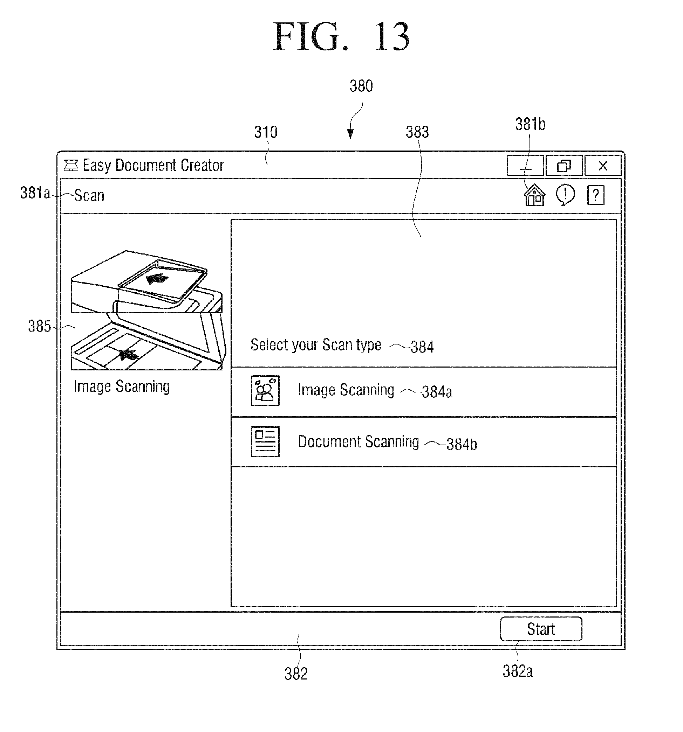

Referring to FIG. 13, similar to FIG. 4, the scan task screen 380 may include a title area 310 which displays the name of the scan application, a first information area 321 which may be placed lower than the title area 310 and which displays a task name 381a (e.g., scan), a second information area 322 which may be placed lower than the first information area 311 and which contains a start button 322a that starts a task of a selected SNS upload type 384a, 384b, and a scan type display area 383 which may be placed between the first and second information areas 381, 382 and which displays the scan type 384 provided by the scan task 315. The scan type display area 383 displays a plurality of scan types including image scan 374a and document scan 374b. The image scan 374a and the document scan 374b may be added to or deleted from the scan type display area 383 according to setting by the configuration set task 316.

The image scan 384a may be selected through the input unit 150 or by touching on the scan type display area 383 of the scan task screen 380. The selected image scan 384a may be distinctively displayed from the other scan type 374b on the scan type display area 383. If a cursor may be placed on the image scan 384a, an icon 385 corresponding to the image scan 384a on which the cursor may be placed, is displayed on a side of the scan type display area 383.

If the start button 382a of the second information area 372 may be selected, the image scan 384a starts. If the image scan 384a of the scan type display area 383 may be selected, the image scan 384a may start without requiring selecting the start button 382a.

Since the prescanning (S216) of the image scan 384a and the prescanning (S204) of the SNS scan 324a, the scanning (S217) of the image scan 384a and the scanning of the SNS scan 324a, and the selecting (S218) of the image file of the image scan 384a and the selecting (S206) of the image file of the SNS scan 324a are substantially identical to each other, detailed description thereof will be omitted for the sake of brevity.

At S219 (see, for example, FIG. 2), it may be selected to save the image file.

Referring to FIG. 6, at least one image may be selected from among a plurality of thumbnail images displayed on the thumbnail area 347. The lastly-scanned image file 343a may be selected first on the preview area 343. If it is necessary to select a thumbnail image which is different from the selected image file 343a, it is possible to select from the rest thumbnail images 347b, 347c of the thumbnail area 347 using the input unit 150 or by touching.

Similar to the SNS upload task 314, the scan task 315 may also be capable of SNS uploading. For SNS uploading of the image file, operation S208 is performed. Since the SNS uploading of the image file at the scan task 315 after S207 are substantially identical to operations S209 to S212 performed at the SNS upload task 314, detailed description thereof will be omitted for the sake of brevity.

At S220 (see, for example, FIG. 2), the image file is saved.

The image file 343a is saved at a predetermined location (e.g., c: /temp/) of the save location 346b of the save location area 336 according to the control by the scan application 300 or the control unit 110. The save location 346b may change to different location of the storage unit.

At S221 (see, for example, FIG. 2), the history is saved.

There may be the image file 343a, which is saved at the storage unit instead of being uploaded to SNS site, and the history thereof is saved at the storage unit of the apparatus 100. The saved history may include more than one of: save date, save location (e.g., c:/temp/), file name, file format, or size of image file (e.g., 240 KB). The history may be saved in markup language or as text file. Once saved, the history may be loaded by the history manager 128. Using the history loaded by the history manager 128, it is possible to select the image file (e.g., 343a) displayed on the history and upload the same to the SNS site.

If the history is saved, the method of the scan task for uploading an image file to SNS site is finished.

Returning to S214 (FIG. 2), if the scan task is not selected, the operation moves to S222.

At S222 (see, for example, FIG. 2), the configuration set task may be selected.

Referring to FIG. 3, the configuration set task 317 may be selected from the task display area 313 of the displayed home screen 300. Since the operation at S222 for selecting configuration set task 317 is substantially identical to S202, detailed description thereof will be omitted for the sake of brevity. The operation ends if the configuration set task 316 is not selected.

At S223 (see, for example, FIG. 2), configuration is set.

FIG. 14 is a view illustrating login setting of an apparatus to a SNS site according to an exemplary embodiment.

Referring to FIG. 14, the configuration set task screen 390 may include a title area 310 which displays the name of the scan application, a first information area 391 which may be placed lower than the title area 310 and which displays a task name 391a (e.g., configuration set), and a home button 391b to change from the configuration set task screen 390 to the home screen 300, a second information area 382 which may be placed lower than the first information area 391 and which contains an enter button 392a to apply the SNS login setting and move to the home screen 300, and a cancel button 392b to cancel SNS login setting and move to the home screen, and a SNS login set area 383 which may be placed between the first and second information areas 391, 392 to set ID/password input 393b corresponding to at least one SNS site 393a.

The SNS site 393a may be selected from the displayed SNS login set area 393 and registered ID and password 393b corresponding to the selected SNS site 393a are inputted. The number of tasks displayed on the task display area 313, the number of SNS upload types displayed on the task type display area 323, or the number of thumbnail images displayed on the thumbnail area 347 may be changed on the configuration set task 316.

If the configuration setting is completed, the SNS site login setting for the SNS uploading of the image file is also completed.

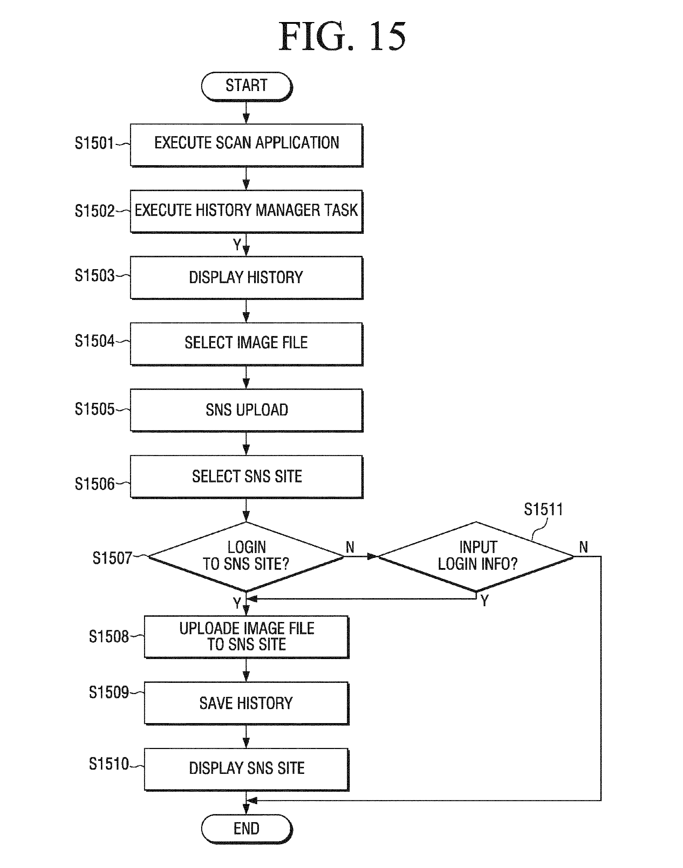

FIG. 15 is a schematic flowchart illustrating a method for uploading an image file of an apparatus to a SNS site according to another exemplary embodiment.

At S1501 (see, for example, FIG. 15), scan application is executed.

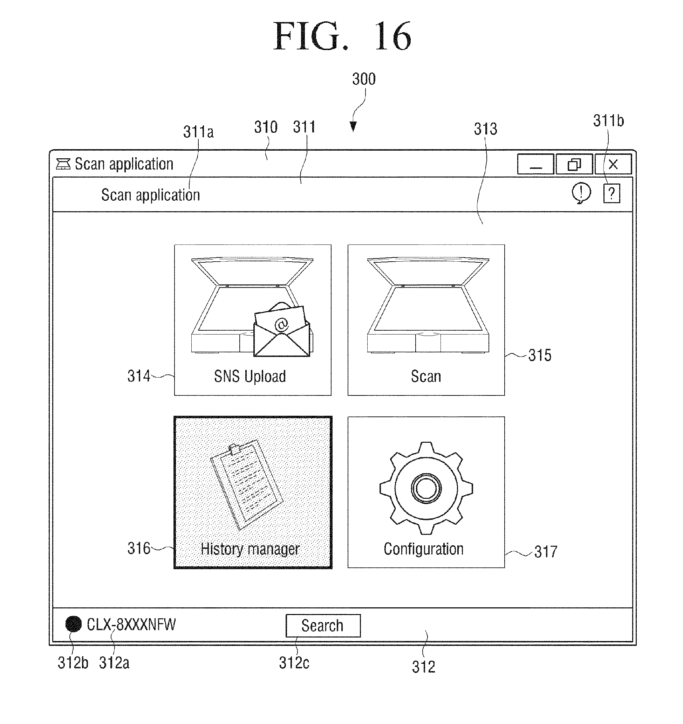

FIGS. 16 to 22 are views illustrating a method for uploading an image file of an apparatus to a SNS site according to another exemplary embodiment.

The scan application 120 is executed, if an icon (not illustrated) corresponding to the scan application 120 on the background screen may be selected, or an icon (not illustrated) corresponding to the scan application 120 on the taskbar may be selected. If the scan application 120 is executed, the home screen 300 provided by the scan application is displayed.

At S1502 (see, for example, FIG. 15), the history manager task may be selected.

Referring to FIG. 16, the history manager task 316 may be selected from the task display area 313 of the home screen 300. Since selecting (S1502) the history manager task 316 are substantially identical to the selecting (S202) the SNS upload task 314, detailed description thereof will be omitted for the sake of brevity.

At S1503 (see, for example, FIG. 15), the history is displayed.

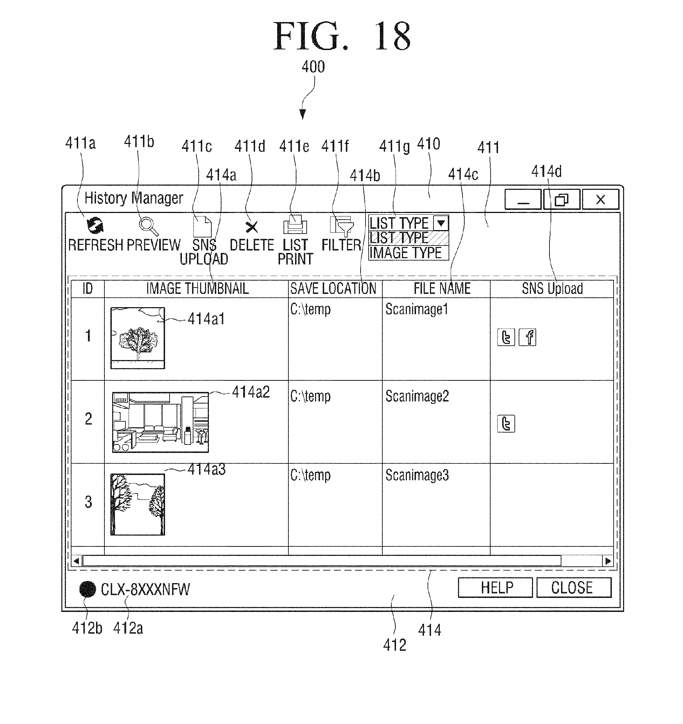

Referring to FIGS. 17 and 18, the history manger screen 400 may include a title area 410 which displays a name 410a of the history manager, a tool area 411 which may be placed lower than the title area 410 and which displays icons of a plurality of menus (e.g., SNS upload), an information area 412 which may be placed lower than the tool area 411 and which contains a model name 412a of the image scanning apparatus 181 connected to the apparatus 100 and a connection state icon 412b, and a history information display area 413 which may be placed between the tool area 411 and the information area 412 and which displays the saved history.

The tool area 411 may include more than one of a refresh 411a to refresh the displayed history, a preview 411b to view in advance the image file selected from the history, a SNS upload 411C to upload the image file selected from the history to the SNS site, a delete 411d to delete the image file, a list print 411e to print out the history, a filter 411f to cause the history to be displayed in accordance with the conditions (e.g., date) as inputted, and a history display type 411g to select between an image type and a list type to display the history.

The delete 411d of the tool area 411 may delete at least one of an image file corresponding to the thumbnail image displayed on the history and image file posted on the SNS site, using the SNS service module 128e. By way of example, the delete 411d may delete the image saved at the storage unit (e.g., before or after uploading), or delete only the image file posted on the SNS site, or delete both the image file posted on the SNS site and the image file saved at the storage unit. If the delete 411d of the tool area 411 may be selected, a list of image files saved at the apparatus and a list of image files posted on the SNS site may be displayed. If there are no image file lists, the same may be inactivated. At least one image file selected by the user may be deleted. The SNS service module 128e may delete the image file uploaded to the SNS using path information of the SNS login setting set at the configuration set module 125 and the history saved at the history save module 126. If the image file is deleted, the history saved at the storage unit is updated.

The history display area 413 may include more than one of: save date 413a, save location 413b, file name 413c, file format 413d, file size 413e, number of pages 413f, and a name 413g of uploaded SNS site of the saved image file. The history display area 413 may display as compulsory items the file name 413c and the name 413g of the uploaded SNS site.

Referring to FIG. 18, the history manager screen 400 is similar to the history manager screen 300 of FIG. 17 (except the history display area 413 which is different). The history display area 414 of FIG. 18 includes more than one of: thumbnail image corresponding to the saved image file 414a1 to 414a3, save location 414b, file name 414c, and name 414d of uploaded SNS site. The history display area 414 may display as compulsory items the thumbnail image 414a and the name 414d of the uploaded SNS site. Further, the history display area 414 may display only the thumbnail 414a of the image file.

Depending on configuration setting of the configuration set task 317, one of image type and list type may be set. Depending on the result of setting, one of the list type history of FIG. 17 and image type history of FIG. 18 is displayed as the history manager 128 is executed. Hereinbelow, the list type history will be explained according to one exemplary embodiment.

At S1504 (see, for example, FIG. 15), the image file may be selected.

Referring to FIG. 18, at least one of a plurality of thumbnail images 414a1 to 414a3 displayed on the history display area 414 may be selected by the user. The selected thumbnail image 414a1 may be distinctively displayed from the rest thumbnail images 414a2, 414a3. The selected thumbnail image 414a1 is saved at the storage unit of the apparatus 100 without being uploaded to the SNS site. A first thumbnail image 414a2 of the thumbnail images 414a2, 414a3 is uploaded to the site(s) such as Twitter® and Facebook®, and a second thumbnail image 414a3 of the rest thumbnail images 414a2, 414a3 is uploaded to the site, such as Twitter®. If it necessary to preview the selected thumbnail image 414a1, it is possible to do so by using the preview 411b menu of the tool area 411.

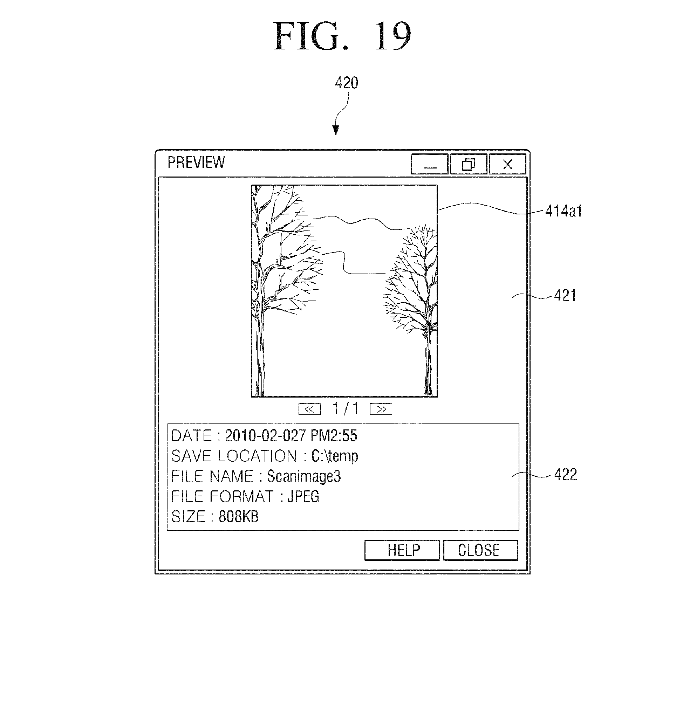

Referring to FIG. 19, the preview screen 420 includes a preview display area 421 which displays an image file 421a corresponding to the selected thumbnail image 414a1, and a detailed information display area 422 which displays detailed information (e.g., save location, file name, etc.) of the displayed image file 421a.

At S1505 (see, for example, FIG. 15), SNS upload may be selected.

Referring to FIG. 18, in order to upload the selected thumbnail image 414a1 to the SNS site, the SNS upload 411c of the tool area 411 may be selected through the input unit 150 or by touching.

At S1506 (see, for example, FIG. 15), the SNS site may be selected.

If the SNS upload 411c may be selected at S1505, the upload screen of FIG. 19 appears. The image file 353b corresponding to the selected thumbnail image 414a1 is displayed on the preview area 353 of the upload screen 350. The SNS site (e.g., Facebook®), to which the image file 353b displayed on the preview area 353 is uploaded, may be selected from the SNS site list area 354. Further, the posting period 352b and the scheduled transmission 352c are inputted through the second status area 352.

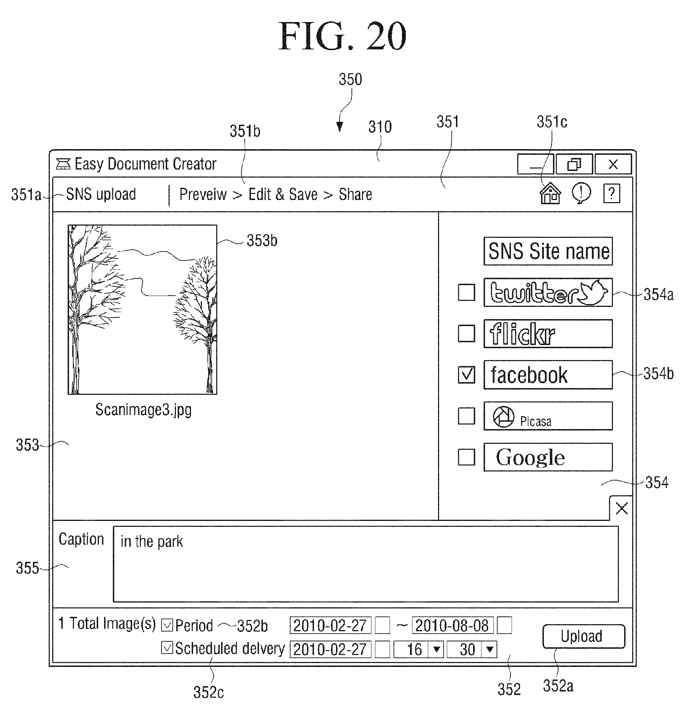

The upload screen of FIG. 20 is identical to the upload screen 430 of FIG. 7. The only difference between the upload screens of FIGS. 7 and 20 is the image files displayed on the preview area 353. Since selecting the SNS site at S1506 is substantially identical to operation at S208 of FIG. 2, detailed description thereof will be omitted for the save of brevity.

The operation at S1506 (see, for example, FIG. 15) of logging in the SNS site is performed.

The scan application 120 or the control unit 110 logs in the SNS site 354b selected from the SNS site list area 354 using the SNS login setting 393 set at the configurations set task 316. Since logging in the SNS site at S1506 is substantially identical to the operation at S209 of FIG. 2, detailed description thereof will be omitted for the sake of brevity. If logging in the SNS site is unsuccessful, the operation moves to S1511.

At S1508 (see, for example, FIG. 15), image file is uploaded to the SNS site.

Accordingly, upon logging in the selected site (e.g., Facebook®), the selected image file 353b is uploaded to the SNS site 354b using the API which corresponds to the selected SNS site 354b. Since uploading the image file to the selected SNS site (e.g., Facebook®) at S1508 is substantially identical to the uploading of the image file to the Facebook® at S210 of FIG. 2, detailed description thereof will be omitted for the sake of brevity.

At S1509 (see, for example, FIG. 15), the history is saved.

The history corresponding to the uploaded image file 353c is updated at the storage unit of the apparatus 100. Referring to FIG. 18, corresponding to the updated history, a thumbnail image (not illustrated) corresponding to the site such as Facebook® may be added to the name 414d of the uploaded SNS site of the thumbnail image 414a3 displayed on the history display area 414.

At S1510 (see, for example, FIG. 15), the SNS site is displayed.

If uploading the image file 353b to the selected SNS site is successful, the scan application 300 executes the web browser 360 installed on the apparatus 100 so that the display 155 displays the same.

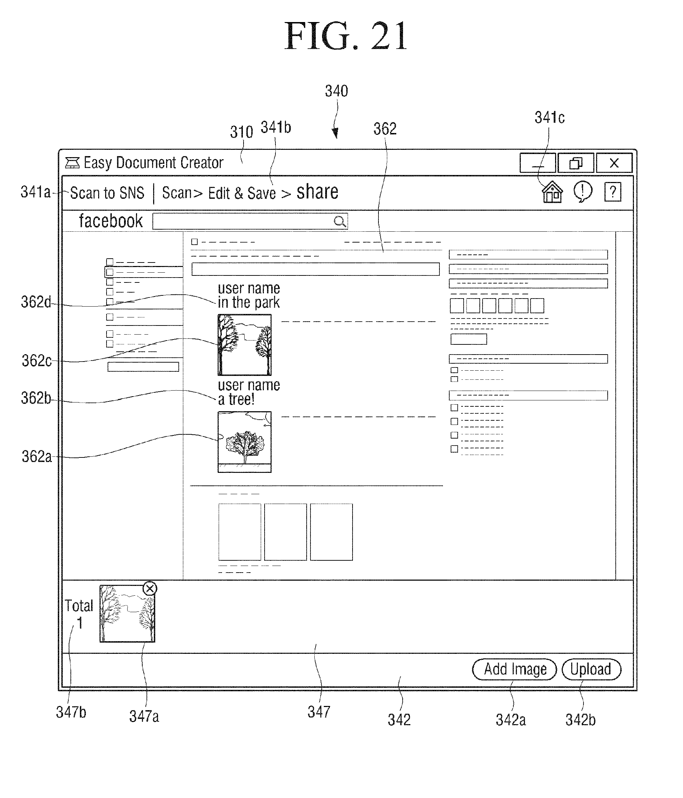

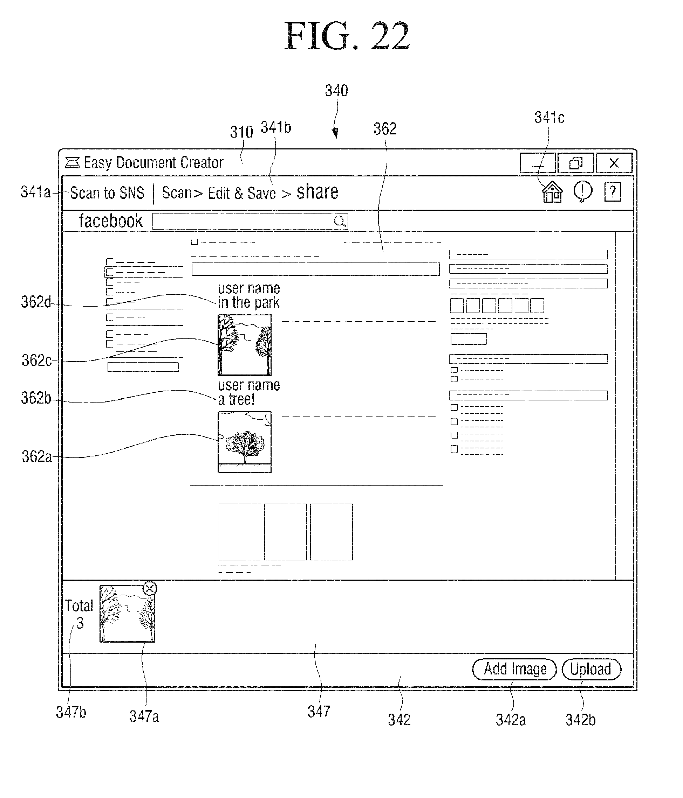

Referring to FIG. 21, the web browser screen 362 displays the thumbnail image 362c and the caption 362d corresponding to the uploaded image file 353b. Further, the web browser screen 362 displays the thumbnail image 362a and the caption 362b corresponding to the uploaded image file 353a together. Referring to FIG. 22, if uploading the image file 353b to the selected SNS site is successful, the scan application 120 may cause the web browser screen 362 to be displayed instead of the preview area 343, the toolbar area 344, the option area 345 and the save location area 346 of the upload screen 350 of FIG. 6.

If SNS site, to which the image file 353b is uploaded, is displayed on the web browser screen 362 of the web browser 360, the method of the history manager task to upload the image file to the SNS site is completed.

Returning to S1507 (see, for example, FIG. 15), if logging in the SNS site is unsuccessful, the operation moves to S1511.

At S1511 (see, for example, FIG. 15), login information is inputted.

Since inputting the login information at S1511 is substantially identical to operation at S213 of FIG. 2, detailed description thereof will be omitted for the sake of brevity.

Exemplary embodiments of the invention may be implemented in the form of program commands that can be executed by a variety of computing means and may also be recorded on a computer-readable media. The computer-readable media may contain program commands, data files, or data structure singly or in combination. The program commands recorded on the media may be designed or constructed specially for the invention, or may be those that are well known and usable among those skilled in the computer software field.

The foregoing exemplary embodiments and advantages are merely exemplary and are not to be construed as limiting the present invention. The present teaching can be readily applied to other types of apparatuses. Also, the description of the exemplary embodiments of the present inventive concept is intended to be illustrative, and not to limit the scope of the claims, and many alternatives, modifications, and variations will be apparent to those skilled in the art.

Although a few embodiments have been shown and described, it will be appreciated by those skilled in the art that changes may be made in these embodiments without departing from the scope of the invention which is defined by the claims.

## Claims

1. A method for uploading an image file to a social network service (SNS) using an apparatus connectable to an image scanning apparatus, the method comprising:
displaying history information on a user interface screen which is displayed on a display unit of the apparatus by an application executed on the apparatus;
selecting an image file displayed on the history information;
selecting a SNS site; and
uploading the selected image file to the selected SNS site, wherein the history information is generated by the application, according to one of a first image file generated through the image scanning apparatus and uploaded to the SNS site, a second image file generated through the image scanning apparatus and yet to be uploaded to the SNS site, and a third image file previously saved on a storage unit of the apparatus and uploaded on the SNS site.

2. The method of claim 1, further comprising:
logging on the SNS site; and
displaying, on a web browser screen executed on the apparatus, the SNS site to which the selected image file is uploaded.

3. The method of claim 1 or 2, wherein the history information is provided in an image type or a list type, wherein the image type history information displays a thumbnail image corresponding to the image file on the user interface screen displayed on the apparatus, and the list type history information displays texts corresponding to the image file.

4. The method of claim 1, 2 or 3, wherein the selecting the SNS site comprises distinctively displaying the SNS site depending on whether the selected image file is uploadable or not.

5. The method of any preceding claim, wherein the uploading the selected image file comprises uploading the selected image file to the SNS site using an API corresponding to the selected SNS site.

6. The method of any preceding claim, wherein the selected image file is scheduled to be uploaded to the SNS site.

7. The method of any preceding claim, wherein a period for which the selected image file is posted in the SNS site is set according to a posting period included in the history information.

8. An apparatus connectable to an image scanning apparatus, the apparatus comprising:
a communication interface unit connectable to the image scanning apparatus;
a control unit which controls the communication interface unit; and
a storage unit,
wherein the control unit controls the application to display history information on a user interface screen provided by the application displayed on a display unit of the apparatus, select an image file from the displayed history information, and select a (Social Network Service) SNS site so that the selected image file to the selected SNS site, and the history information is generated by the application.

9. The apparatus of claim 8, wherein the history information is generated according to a first image file generated through the image scanning apparatus and uploaded to the SNS site, a second image file generated through the image scanning apparatus and yet to be uploaded to the SNS site, and a third image file previously saved at the storage unit of the apparatus and uploaded to the SNS site.

10. The apparatus of claim 8 or 9, wherein the control unit controls so that the selected image file is transmitted to the SNS site via the communication interface unit using an API corresponding to the SNS site.

11. The apparatus of claim 8, 9 or 10, wherein the control unit controls to log in the SNS site, and
upon login, to display the SNS site, to which the image file is uploaded, on a web browser screen displayed on the display unit.

12. The apparatus of any of claims 8 to 11, wherein the display unit is an all-in-one apparatus.

13. A method for uploading a file to an apparatus comprising:
displaying history information on a screen;
selecting a displayed file;
selecting a site; and
uploading the selected file to the selected site, wherein the history information is generated by an application, according to one of a first file generated through the apparatus and uploaded to the site, a second file generated through the apparatus and not yet uploaded to the site, and a third file previously saved on a storage unit of the apparatus and uploaded on the site.
